Europäisches Patentamt

European Patent Office

Office européen des brevets

(19)

(11) Veröffentlichungsnummer : **0 332 903 B1**

(12) **EUROPÄISCHE PATENTSCHRIFT**

(45) Veröffentlichungstag der Patentschrift :
17.06.92 Patentblatt 92/25

(51) Int. Cl.⁵ : **F16F 13/00, B60K 5/12**

(21) Anmeldenummer : 89103319.3

(22) Anmeldetag : 24.02.89

(54) **Hydraulisch dämpfendes Zweikammer-Motorlager.**

(30) Priorität : **17.03.88 DE 3808996**

(43) Veröffentlichungstag der Anmeldung :
**20.09.89 Patentblatt 89/38**

(45) Bekanntmachung des Hinweises auf die
Patenterteilung :
**17.06.92 Patentblatt 92/25**

(84) Benannte Vertragsstaaten :
**DE ES FR GB IT SE**

(56) Entgegenhaltungen :
EP-A- 0 183 251
EP-A- 0 183 267
EP-A- 0 268 785
DE-A- 3 443 619
DE-A- 3 510 464
DE-A- 3 629 807

(56) Entgegenhaltungen :
**PATENT ABSTRACTS OF JAPAN, Band 9, Nr. 3
(M-349)[1726], 9. Januar 1985; & JP-A-59 155
637 (MASAO AKIMOTO) 04-09-1984
PATENT ABSTRACTS OF JAPAN, Band 9, Nr.
322 (M-440)[2045], 18. Dezember 1985; & JP-
A-60 155 028 (BRIDGESTONE K.K.)14-08-1985
PATENT ABSTRACTS OF JAPAN, Band 11, Nr.
205 (M-603)[2652], 3. Juli 1987; & JP-A-62 24
048 (BRIDGESTONE CORP.) 02-02-1987**

(73) Patentinhaber : **METZELER GIMETALL AG
Gneisenaustrasse 15
W-8000 München 50 (DE)**

(72) Erfinder : **Kaiser, Franz-Josef
Südstrasse 2
W-5431 Bannberscheid (DE)**
Erfinder : **Sauer, Wolfgang, Dr.
Im Gebück 3a
W-5412 Ransbach (DE)**

(74) Vertreter : **Michelis, Theodor, Dipl.-Ing. et al
Seibert + Michelis Rechtsanwälte und
Patentanwälte Tattenbachstrasse 9
W-8000 München 22 (DE)**

## Beschreibung

Die Erfindung bezieht sich auf ein hydraulisch dämpfendes Zweikammer-Motorlager, mit einer Arbeitskammer, die von einer kegelmantelförmigen elastomeren Wandung und einer stirnseitigen Lagerplatte begrenzt ist und über einen Überströmkanal in einer starren Zwischenplatte mit einer Ausgleichskammer in Verbindung steht, sowie mit einem integrierten Zuganschlag in Form eines von der innenliegenden Stirnseite der Lagerplatte in die Arbeitskammer ragenden, ringförmigen Anschlagtellers, der auf seiner Oberseite von einem angenähert kegelmantelförmigen, mit der Zwischenplatte (3) fest verbundenen Anschlagring hintergriffen ist.

Ein derartiges Motorlager ist aus der DE-A-3443 619 bekannt. Bei dem dort vorgesehenen integrierten Zug- und Druckanschlag ist der Anschlagteller starr mit der Lagerplatte verbunden, so daß trotz einer Gummiauflage auf dem Anschlagteller bei entsprechender Auslenkung ein relativ harter Anschlag am Anschlagring oder auf der Zwischenplatte erfolgt, was unerwünschte Geräusche zur Folge haben kann.

Der vorliegenden Erfindung liegt daher die Aufgabe zugrunde, ein Motorlager mit einem integrierten Zug- und Druckanschlag zu schaffen, bei dem ein weiches, geräuscharmes Anschlagen sichergestellt ist und bei dem zusätzlich noch durch eine besondere Gestaltung die dynamische Steifigkeit des Lagers über einen begrenzten Frequenzbereich herabgesetzt werden kann.

Zur Lösung dieser Aufgabe ist erfindungsgemäß vorgesehen, daß der ringförmige Anschlagteller mit seiner Innenkante am Ende eines in die Arbeitskammer ragenden zylindrischen Ansatzes der Lagerplatte begrenzt beweglich unter Dämpfung seiner axialen und radialen Beweglichkeit aufgehängt ist.

Durch diese bedämpfte Aufhängung des Anschlagtellers ergeben sich einmal größere Axial- und Radialfreiwege des Anschlagtellers und zum anderen wird ein weicher Anschlag beim Auftreffen des Anschlagtellers auf eine Gegenfläche bewirkt.

Die Dämpfung der Beweglichkeit kann dabei dadurch erreicht werden, daß der Anschlagteller im Bereich seiner Innenkante am Ende des in die Arbeitskammer ragenden Ansatzes gummielastisch aufgehängt ist. Dazu kann eine am innenliegenden Ende des zylindrischen Ansatzes umlaufende Nut gebildet sein, in die die mit gummielastischem Material ummantelte Innenkante des Anschlagtellers eingesetzt ist.

Eine andere Möglichkeit zur Erreichung einer Dämpfung besteht darin, daß der Freiraum für die Beweglichkeit des Anschlagtellers nach außen mit mindestens einer gummielastischen Membran abgedichtet und mit einer hochviskosen Flüssigkeit gefüllt ist. Dazu kann die Beweglichkeit des Anschlagtellers ebenfalls durch eine am innenliegenden Ende des zylindrischen Ansatzes umlaufende Nut gebildet sein, in die der Anschlagteller mit axialem und radialem Spiel eingesetzt ist und wobei zwischen Oberkante der Nut und Oberseite des Anschlagtellers einerseits sowie zwischen Unterkante der Nut und Unterseite des Anschlagtellers andererseits je eine ringförmige, gummielastische Membran abdichtend angeordnet und der von den Membranen umschlossene Raum mit der hochviskosen Flüssigkeit gefüllt ist.

In Weiterbildung der Erfindung kann am äußeren Umfang des mit einer Gummiauflage ummantelten Anschlagringes eine Gummilippe einer solchen Breite radial abragen, daß mit der gegenüberstehenden Innenwandung des Motorlagers ein freier Spalt vorgegebener Breite gebildet ist. Hierdurch wird eine gezielte Spaltströmung der hydraulischen Flüssigkeit bewirkt, die zu einer zusätzliche Isolation akustischer Schwingungen führt.

Anhand einer schematischen Zeichnung sind Aufbau und Funktionsweise von Ausführungsbeispielen nach der Erfindung näher erläutert. Dabei zeigen

Fig. 1 einen Längsschnitt durch ein Zweikammer-Motorlager mit integriertem Zug- und Druckanschlag mit gummielastisch aufgehängtem Anschlagteller und

Fig. 2 einen Teilschnitt durch das Lager nach Fig. 1 mit einem Anschlagteller, der durch hochviskose Flüssigkeit gedämpft ist.

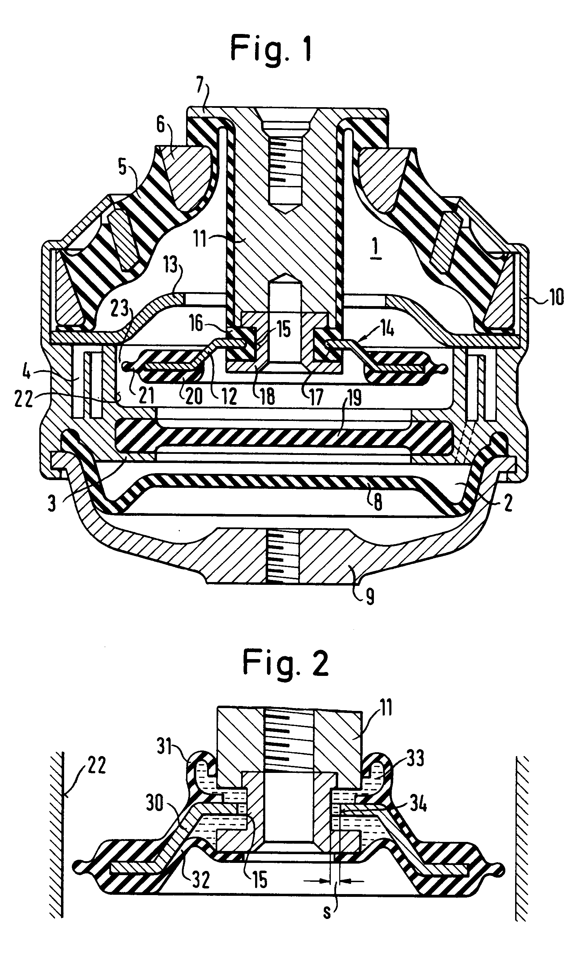

Nach dem in Fig. 1 dargestellten Ausführungsbeispiel weist das Motorlager eine Arbeitskammer 1 und eine Ausgleichskammer 2 auf, die über einen, in einer Zwischenplatte 3 angeordneten ringförmigen Kanal 4 miteinander in Verbindung stehen. In die Zwischenplatte 3 ist dabei zentral noch eine gummielastische Membran 19 zur Entkopplung hochfrequenter Schwingungen eingespannt. Die Arbeitskammer 1 ist von einer angenähert kegelmantelförmigen und als Tragfeder wirkenden Umfangswand 5 aus gummielastischem Material umschlossen, die stirnseitig von einem Lagerring 6 und einem auf seiner Oberseite aufvulkanisierten, als Halterungsplatte 7 ausgebildeten Schubelement mit einstellbarer Radialsteifigkeit abgeschlossen ist.

Die Ausgleichskammer 2 ist von einem elastischen Balg 8 begrenzt und wird von einem unteren Gehäusedeckel 9, der gleichzeitig als Montagepunkt dient, nach außen abgeschlossen. Die wesentlichen das Motorlager bildenden Einzelteile, nämlich die kegelmantelförmige Kammerwandung 5, die Zwischenplatte 3 mit dem Kanal 4, der Balg 8 und der Gehäusedeckel 9 werden von einem außenliegenden Ring 10, der Bestandteil der Zwischenplatte 3 ist, umfaßt und abdichtend gegeneinander verspannt.

Das Motorlager weist ferner einen integrierten Zug- und Druckanschlag auf, der aus einem vom innenliegenden Ende eines in die Arbeitskammer 1 ragenden zylindrischen Ansatzes 11 der Lagerplatte 7 abragenden, ringförmigen Anschlagtellers 12 besteht, der auf seiner Oberseite von einem angenähert kegelmantelförmigen Anschlagring 13 hintergriffen ist.

Erfindungsgemäß ist dieser Anschlagteller 12 an der innenliegenden Kante begrenzt beweglich gummielastisch gedämpft aufgehängt. Im folgenden wird die begrenzt bewegliche Anordnung als Lose 14 bezeichnet. Dazu weist das innenliegende Ende des Ansatzes 11 eine umlaufende Nut 15 auf, in die die mit gummielastischem Material 16 ummantelte Innenkante 17 des Anschlagtellers 12 eingesetzt ist. Dabei wird zweckmäßigerweise der Anschlagteller 12 und die die Lose 14 bildende Gummiummantelung 16 in einer Form vulkanisiert und dann mittels eines gesonderten Ringes 18 in den Ansatz 11 eingesetzt.

Diese gummielastische Aufhängung des Anschlagtellers 12 bewirkt in der Federcharakteristik des Lagers einen kontinuierlichen Übergang von der weicheren Federsteifigkeit der Tragfeder 5 in die harte Federsteifigkeit beim Anliegen des Anschlagtellers 12 entweder an der Zwischenplatte 3 oder am Anschlagring 13, so daß bei Stoßbelastungen die Geräuschübertragung vermindert wird.

Die gummielastische Aufhängung ermöglicht darüber hinaus kardanische Bewegungen des Anschlagtellers 12 relativ zur Lagerplatte 7, wenn die Tragfeder 5 unter Radial- Axialkräften ausgelenkt wird. Dabei läßt diese gummielastische Aufhängung bei gleichem Bauraum im Vergleich zu einem starr befestigten Anschlagteller größere Axial- und Radialwege zu.

Ferner arbeitet der gummielastisch aufgehängte Anschlagteller 12 bei oszillierender Anregung der metallischen Lagerplatte 7 als gegenschwingende Masse und reduziert in seiner Tilgerwirkung die dynamische Steifigkeit des Lagers in einem begrenzten Frequenzbereich.

In Weiterbildung der Erfindung weist der in herkömmlicher Weise am äußeren Umfang mit einer Gummiauflage 20 ummantelte Anschlagteller 12 am äußeren Umfang eine radial abragende Gummilippe 21 auf, die eine solche Breite hat, daß mit der gegenüberstehenden Innenwandung 22 ein schmaler Spalt 23 vorgegebener Breite freibleibt. Die jetzt bei einer schwingungsmäßigen Anregung der metallischen Lagerplatte 7 induzierte Strömung in diesem Spalt 23 ist der Flüssigkeitsströmung im Überströmkanal 4 vorgeschaltet und bewirkt damit eine Reduzierung der dynamischen Steifigkeit des Lagers, um im Frequenzbereich der akustischen Schwingungen besser zu isolieren. Durch eine geeignete Abstimmung dieser Spaltgeometrie kann das Minimum der dynamischen Steifigkeit in Abhängigkeit von der Frequenz eingestellt werden.

Eine mögliche Variante der dämpfenden Aufhängung der Lagerplatte ist in dem Ausführungsbeispiel nach Fig. 2 dargestellt, bei dem lediglich das untere Ende des zylindrischen Ansatzes 11 und die Anordnung des Anschlagtellers 30 im vergrößerten Maßstab zeigt.

Der Anschlagteller 30 ist dabei in der als Lose fungierenden Nut 15 mit axialem und radialem Spiel eingelegt. Dieser Anschlagteller 30 ist nunmehr auf seiner Oberseite über eine ringförmige Membran 31 mit dem unteren Teil des Ansatzes 11 oberhalb der Nut 15 und über eine ringförmige Membran 32 von der Unterseite des Anschlagtellers mit dem Bereich unterhalb der Nut 15 flüssigkeitsdicht verbunden. Der so gebildete Freiraum 33 ist nunmehr mit einer hochviskosen Flüssigkeit gefüllt.

Damit ergibt sich einmal ein großer Axialfreiweg des Anschlagtellers 30 innerhalb der Lose 15 in Zug- und Druckrichtung, wie das mit einem einvulkanisierten Anschlag kaum möglich ist. Durch die größere Beweglichkeit des Anschlagtellers ist auch die Isolation von Körperschall ebenfalls größer.

Die Federcharakteristik beim Anliegen des Anschlagtellers an die Anschläge kann durch Veränderung der Spaltbreite s zwischen der inneren Öffnung 34 des Anschlagtellers 30 und der Innenwand 15 der Lose verändert werden, da die hochviskose Flüssigkeit den Spalt unter Verlusten durchströmen muß, die zu einer Dämpfung der Bewegung führen.

Mit der beschriebenen Aufhängung des Anschlagtellers in einer Lose unter Dämpfung der Bewegungen in axialer und radialer Richtung sind also ein größerer Freiweg des Anschlags, ein sanfterer Anschlag mit verminderter Geräuschentwicklung und darüber hinaus durch Wirkung des relativ frei beweglichen Anschlagtellers als zusätzliche Tilgermasse eine Absenkung der dynamischen Steifigkeit des Lagers möglich.

## Patentansprüche

1. Hydraulisch dämpfendes Zweikammer-Motorlager, mit einer Arbeitskammer (1), die von einer kegelmantelförmigen elastomeren Wandung (5) und einer stirnseitigen Lagerplatte (7) begrenzt ist und über einen Überströmkanal (4) in einer starren Zwischenplatte (3) mit einer Ausgleichskammer (2) in Verbindung steht, sowie mit einem integrierten Zug- und Druckanschlag in Form eines von der innenliegenden Stirnseite der Lagerplatte (7) in die Arbeitskammer ragenden, ringförmigen Anschlagtellers (12,30), der auf seiner Oberseite von einem angenähert kegelmantelförmigen, mit der Zwischenplatte (3) fest verbundenen Anschlagring (13) hintergriffen ist, dadurch gekennzeichnet, daß der ringförmige Anschlagteller (12; 30) mit seiner Innenkante am Ende eines in die Arbeitskammer (1) ragenden zylindrischen Ansatzes (11) der Lagerplatte (7) begrenzt beweglich unter Dämpfung seiner axialen und radialen Beweglichkeit aufgehängt ist.

2. Motorlager nach Anspruch 1, dadurch gekennzeichnet, daß der Anschlagteller (12) im Bereich seiner Innenkante am Ende des in die Arbeitskammer(s) ragenden Ansatzes (11) gummielastisch aufgehängt ist.

3. Motorlager nach Anspruch 1 und 2, dadurch gekennzeichnet, daß eine am innenliegenden Ende des zylindrischen Ansatzes (11) umlaufende Nut (15) gebildet ist, in die die mit gummielastischem Material (16) ummantelte Innenkante (17) des Anschlagtellers (12) eingesetzt ist.

4. Motorlager nach Anspruch 1, dadurch gekennzeichnet, daß der Freiraum (33) für die Beweglichkeit des Anschlagtellers (12,30) nach außen mit mindestens einer gummielastischen Membran (31, 32) abgedichtet und mit einer hochviskosen Flüssigkeit gefüllt ist.

5. Motorlager nach Anspruch 4, dadurch gekennzeichnet, daß die Beweglichkeit des Anschlagtellers (12,30) durch eine am innenliegenden Ende des zylindrischen Ansatzes (11) umlaufende Nut (14) gebildet ist, in die der Anschlagteller (30) mit axialem und radialem Spiel eingesetzt ist und daß zwischen Oberkante der Nut (15) und Oberseite des Anschlagtellers (30) einerseits sowie zwischen der Unterkante der Nut (15) und der Unterseite des Anschlagtellers (30) andererseits je eine ringförmige, gummielastische Membran (31, 32) abdichtend angeordnet und der von den Membranen (31, 32) umschlossene Raum (33) mit der hochviskosen Flüssigkeit gefüllt ist.

6. Motorlager nach Anspruch 1 und einem der Ansprüche 2 bis 5, dadurch gekennzeichnet, daß am äußeren Umfang des mit einer Gummiauflage (20) ummantelten Anschlagtellers (12) eine Gummilippe (21) einer solchen Breite radial abragt, daß mit der gegenüberliegenden Innenwandung (22) des Motorlagers ein freier Spalt (23) vorgegebener Breite gebildet ist.

## Claims

1. Hydraulically damping twin-chamber engine bearing, having a working chamber (1), which is delimited by a cone shell-shaped elastomeric wall (5) and a front bearing plate (7) and is connected by an overflow channel (4) in a rigid intermediate plate (3) to a compensation chamber (2), as well as having an integrated tension and compression stop in the form of an annular stop plate (12, 30) which projects from the inner end of the bearing plate (7) into the working chamber and behind the top side of which an approximately cone shell-shaped stop ring (13) engages, which is firmly connected to the intermediate plate (3), characterized in that the annular stop plate (12; 30) is suspended by its inner edge on the end of a cylindrical extension (11) of the bearing plate (7), which projects into the working chamber (1), so as to be movable to a limited extent with simultaneous damping of its axial and radial mobility.

2. Engine bearing according to claim 1, characterized in that the stop plate (12) is rubber-elastically suspended in the region of its inner edge on the end of the extension (11) projecting into the working chamber (1).

3. Engine bearing according to claims 1 and 2, characterized in that there is formed on the inner end of the cylindrical extension (11) a circumferential groove (15), into which is inserted the inner edge (17), coated with a rubber-elastic material (16), of the stop plate (12).

4. Engine bearing according to claim 1, characterized in that the free space (33) for mobility of the stop plate (12, 30) is sealed off from the outside by at least one rubber-elastic diaphragm (31, 32) and is filled with a highly viscous fluid.

5. Engine bearing according to claim 4, characterized in that the mobility of the stop plate (12, 30) is provided by a circumferential groove (14) on the inner end of the cylindrical extension (11), into which groove the stop plate (30) is inserted with axial and radial play, and that annular rubber-elastic diaphragms (31, 32) are sealingly disposed between the upper edge of the groove (15) and the top side of the stop plate (30) on the one hand and between the lower edge of the groove (15) and the underside of the stop plate (30) on the other hand and the space (33) enclosed by the diaphragms (31, 32) is filled with the highly viscous fluid.

6. Engine bearing according to claim 1 and one of claims 2 to 5, characterized in that there is, projecting radially from the outer periphery of the stop plate (12) covered with a rubber coating (20), a rubber lip (21) of such a width as to form with the opposing inner wall (22) of the engine bearing a free gap (23) of a predetermined width.

## Revendications

1. Support de moteur à double chambre et à amortissement hydraulique, comportant une chambre de travail (1), délimitée par une paroi (5) élastomère de surface latérale de forme conique et par un plateau formant support (7) du côté frontal et communiquant par un canal de passage (4) ménagé dans une plaque intermédiaire (3) rigide avec une chambre de compensation (2), ainsi qu'une butée en traction et en pression sous la forme d'une coupelle de butée (12, 30) annulaire, qui fait saillie dans la chambre de travail par le côté frontal intérieur du plateau formant support (7) et derrière le côté supérieur de laquelle s'accroche un anneau de butée (13) de surface latérale sensiblement de forme conique et relié rigidement à la plaque intermédiaire (3), caractérisé en ce que le bord intérieur de la coupelle de butée (12; 30) annulaire est suspendu, avec une mobilité limitée et avec amortissement de sa mobilité axiale et radiale, à l'extrémité d'un prolongement (11) cylindrique du plateau formant support (7), qui fait saillie dans la chambre de travail (1).

2. Support de moteur suivant la revendication 1, caractérisé en ce que la coupelle de butée (12) est suspendue avec l'élasticité du caoutchouc dans la région de son bord intérieur à l'extrémité du prolongement (11) faisant saillie dans la chambre de travail (1).

3. Support de moteur suivant la revendication 1 ou 2, caractérisé en ce qu'il est fermé, à l'extrémité intérieure du prolongement (11) cylindrique, une gorge (15) périphérique dans laquelle est inséré le bord intérieur (17) de la coupelle de butée (12), qui est revêtu de matière (16) ayant l'élasticité du caoutchouc.

4. Support de moteur suivant la revendication 1, caractérisé en ce que l'espace libre (33) permettant à la coupelle de butée (12, 30) de se déplacer vers l'extérieur est rendu étanche par au moins une membrane (31, 32) ayant l'élasticité du caoutchouc et est empli d'un liquide très visqueux.

5. Support de moteur suivant la revendication 4, caractérisé en ce que la mobilité de la coupelle de butée (12, 30) est obtenue par une gorge (14) périphérique qui est ménagée à l'extrémité intérieure du prolongement (11) cylindrique et dans laquelle la coupelle de butée (30) est insérée avec du jeu axial et radial et en ce que, entre le bord supérieur de la gorge (15) et le côté supérieur de la coupelle de butée (30) d'une part ainsi qu'entre le bord inférieur de la gorge (15) et le côté inférieur de la coupelle de butée (30) d'autre part, sont interposées, de manière à assurer l'étanchéité, des membranes (31, 32) annulaires et ayant l'élasticité du caoutchouc et l'espace (33) entouré par les membranes (31, 32) est empli de liquide très visqueux.

6. Support de moteur suivant la revendication 1 ou l'une des revendications 2 à 5, caractérisé en ce qu'à la périphérie extérieure de la coupelle de butée (12) revêtue d'une couche de caoutchouc (20) fait saillie radialement une lèvre en caoutchouc (21) d'une largeur telle qu'elle ménage un intervalle (23) libre de largeur prescrite avec la paroi intérieure (22) opposée du support de moteur.

EP 0 332 903 B1

# Fig. 1

# Fig. 2